# EUROPÄISCHE PATENTSCHRIFT

(11) **EP 0 559 965 B1**
(45) Veröffentlichungstag und Bekanntmachung des Hinweises auf die Patenterteilung: **05.03.1997**
(21) Anmeldenummer: 92121651.1
(22) Anmeldetag: 19.12.1992
(51) Int. Cl.: B23B 27/16, B23B 27/06

(54) **Decolletage - Werkzeug**
Form tool
Outil de décolletage

(30) Priorität: 13.03.1992 DE 9203373 U
(43) Veröffentlichungstag der Anmeldung: 15.09.1993
(73) Patentinhaber: HARTMETALL-WERKZEUGFABRIK PAUL HORN GMBH, D-72072 Tübingen (DE)
(72) Erfinder: Seifermann, Norbert, W-7454 Bodelshausen (DE); Ganter, Kurt, W-7410 Reutlingen 3 (DE)
(74) Vertreter: Patentanwälte Bartels und Partner

(56) Entgegenhaltungen:
- EP-A- 51 775
- DE-A- 1 502 048
- DE-A- 2 852 209
- FR-A- 2 203 688
- WERKSTATTSTECHNIK, ZEITSCHRIFT FUR INDUSTRIELLE FERTIGUNG Bd. 70, Nr. 10, Oktober 1980, BERLIN DE Seite 646 'Profilierte Hartmetall-Wechselplatten f r Stechdrehmeissel'

## Beschreibung

Die Erfindung betrifft eine Schneidplatte und einen Halter für deren Aufnahme, mit einer Schneide, deren Form einer in einem Werkstück herzustellenden Kontur angepaßt ist, mit einer durchgehenden Ausnehmung, die für den Durchgriff eines Befestigungsmittels vorgesehen ist, das in eine zugeordnete Ausnehmung in dem Halter eingreift, mit zwei in einem spitzen Winkel aufeinander zulaufenden Seitenflächen und mit einer Grundfläche, die in Anlage mit dem Halter bringbar ist.

Dahingehende gattungsgemäße Schneidplatten in Verbindung mit den zugehörigen Haltern bezeichnet man auch als Decolletage-Werkzeuge und sind durch Werkstattstechnik, Zeitschrift für industrielle Fertigung Bd.70, Nr.10, Oktober 1980, Würzburg DE, Seite 646, "Profilierte Hartmetall-Wechselplatten für Stechdrehmeißel" bekannt. Sie werden in der Regel zum Stechdrehen von Außenkonturen von Werkstücken verwendet, die mittels einer Drehbank bearbeitbar sind. Je nach herzustellender Außenkontur des Werkstückes weist die Schneide einer Schneidplatte die entsprechend angepaßte Schneidenform auf. Üblicherweise sind die Schneidplatten aus einem Sinterwerkstoff hergestellt; sie können aber auch aus Hartmetall oder Oxydkeramik gebildet sein.

Die bekannte Schneidplatte wird mittels eines Befestigungsmittels in Form einer Spannschraube über ihre Grundfläche auf einem Halter festgelegt. Die geradlinig und in einem rechten Winkel zu der Grundfläche verlaufenden Seitenflächen der Schneidplatte werden mit dem Anziehen der Spannschraube gegen parallel zu den Seitenflächen verlaufende Stützflächen des Halters gepreßt.

Kommt die bekannte, auf dem Halter angeordnete Schneidplatte zum Herstellen der Kontur mit ihrer Schneide in Eingriff mit dem Werkstück, entsteht um die Spannschraube, die zwischen der Schneide und den Seitenflächen angeordnet ist, ein Moment auf die Schneidplatte, das versucht, die Seitenflächen von den Stützflächen abzuheben und damit die bestehende Pressung zu verringern. Dies ist Ursache für Fertigungsungenauigkeiten bei der Bearbeitung und der Verschleiß der Schneide ist erhöht.

Es ist zwar durch die FR-A-2 203 688 bekannt, eine verbesserte Fixierung einer Schneidplatte in einem Halter zu schaffen, indem die prismatische Schneidplatte Seitenflächen mit einer Neigung gegenüber ihrer Grundfläche aufweist, die gemäß dem kennzeichnenden Teil des Anspruches 1 in Anlage mit gleichfalls geneigten Stützflächen des Halters bringbar sind. Bei der bekannten Lösung wird die Schneidplatte auf eine Art Fixierungsschlitten gesetzt, der an die Außenkontur der Schneidplatte angepaßt ist und der über die Befestigungsvorrichtung zusammen mit der Schneidplatte in die sie klemmende Stellung am Halter verfahren wird, bei der die geneigten Flächen von Schneidplatte und Halter für einen verbesserten Halt aneinandergepreßt sind. Hierzu weist die Befestigungsvorrichtung grundsätzlich ein erstes Befestigungsmittel auf, das zumindest die Schneidplatte durchgreift, teilweise aber auch den darunterliegenden Fixierungsschlitten, wobei dieses Befestigungsmittel mittels eines weiteren Befestigungsmittels in Form einer Madenschraube, die im Halter unmittelbar geführt ist, bewegt werden kann und so die Einheit von Fixierungsschlitten mit aufgesetzter Schneidplatte von einer die Schneidplatte freigebenden Stellung in ihre Klemmstellung und umgekehrt für einen Austauschvorgang gegen eine neue Schneidplatte oder eine neue Schneide verfahrbar ist.

Ausgehend von diesem Stand der Technik liegt der Erfindung die Aufgabe zugrunde, eine Schneidplatte und Halter für deren Aufnahme zu schaffen, die bei gleicher Materialqualität wie die bekannten Schneidplatten einen geringeren Verschleiß aufweist, mit der höhere Fertigungsgenauigkeiten erzielbar sind und die kostengünstig herstellbar sowie wirtschaftlich einsetzbar ist. Eine dahingehende Aufgabe löst eine Schneidplatte und Halter für deren Aufnahme mit den Merkmalen des Anspruches 1.

Dadurch, daß gemäß dem kennzeichnenden Teil des Anspruches 1 zumindest ein Teil der Seitenflächen gegenüber der Grundfläche der Schneidplatte eine Neigung aufweist, der in Anlage mit geneigten Stützflächen des Halters bringbar ist, die diesen Teil der Seitenflächen zumindest teilweise übergreifen, wobei beim Aufsetzen der Schneidplatte auf den Halter die in ihr vorgesehene Ausnehmung einen Versatz gegenüber der ihr zugeordneten Ausnehmung in dem Halter aufweist und mittels des Befestigungsmittels bei Ausgleich des Versatzes zwischen den Ausnehmungen von Schneidplatte und Halter dieser Teil der Seitenflächen unter Pressung in Anlage mit den Stützflächen gehalten ist, läßt sich die Schneidplatte fest in dem Halter "verankern" und die bei der Bearbeitung auftretenden Momente verändern die Lage der erfindungsgemäßen Schneidplatte gegenüber dem Halter nicht. Fertigungsungenauigkeiten und erhöhter Verschleiß an der Schneide sind somit vermieden.

Weitere bevorzugte Ausführungen der Erfindung sind Gegenstand der Unteransprüche.

Die Erfindung ist im folgenden anhand der Zeichnung näher erläutert.
Es zeigen:
- Fig.1: eine Draufsicht auf das Decolletage-Werkzeug, bestehend aus Schneidplatte und Schneidplattenhalter;
- Fig.2: einen Schnitt nach der Linie II - II in Fig.1;
- Fig.3a,b: einen Schnitt längs der Linie IIIa - IIIa bzw. IIIb - IIIb in Fig.1;
- Fig.4a,b: geänderte Ausführungsformen der erfindungsgemäßen Schneidplatte.

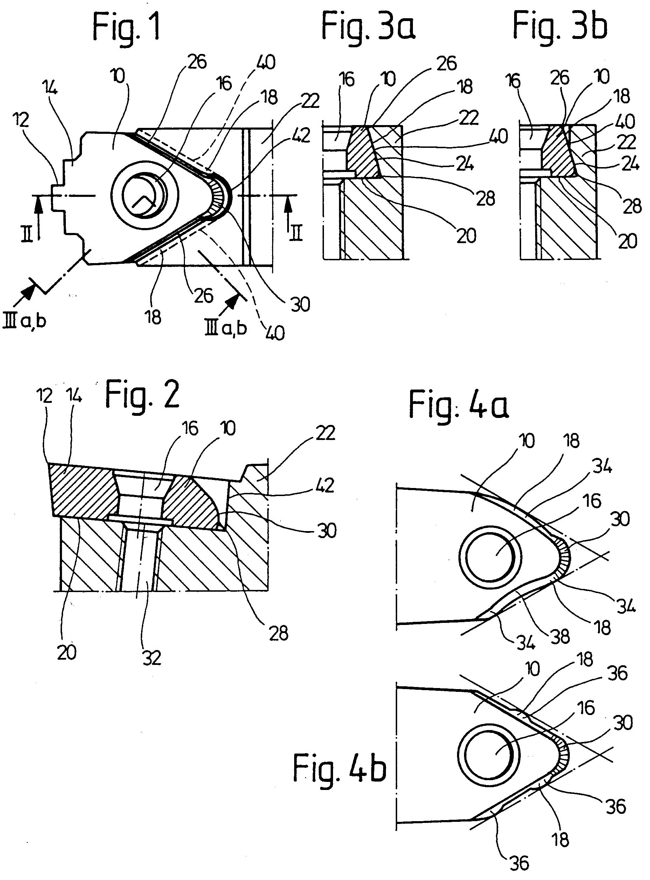

In der Fig.1 ist die Schneidplatte als Ganzes mit 10 bezeichnet. Die Schneidplatte 10 weist an ihrem freien Ende eine Schneide 12 auf, deren Form oder Kontur 14 der in einem Werkstück (nicht dargestellt) herzustellenden Kontur entspricht. Die vorzugsweise aus einem Sinterwerkstoff bestehende Schneidplatte 10 weist eine durchgehende Ausnehmung 16 in Form einer Bohrung auf. Diese Ausnehmung 16 ist für den Durchgriff eines Befestigungsmittels in Form einer Spannschraube (nicht dargestellt) vorgesehen und, wie insbesondere die Fig.2 zeigt, der Außenkontur der Spannschraube entsprechend angepaßt. An ihrem der Schneide 12 abgekehrten Ende weist die Schneidplatte 10 zwei in einem spitzen Winkel aufeinander zulaufende Seitenflächen 18 auf sowie auf ihrer Unterseite eine ebene Grundfläche 20, die in Anlage mit einem Kalter 22 für die Schneidplatte 10 bringbar ist. Der Halter 22 ist in den Fig.1 und 2 nur teilweise dargestellt. Er ist über das in den Fig.1 und 2 der Schneide 12 gegenüberliegende Ende mit einer Verlängerung (nicht dargestellt) versehen, mittels deren der Halter 22 in eine entsprechende Aufnahme einer Drehbank (nicht dargestellt) einsetzbar ist.

Wie insbesondere die Fig.2, 3a und 3b zeigen, weisen die Seitenflächen 18 gegenüber der Grundfläche 20 eine Neigung auf. Bei dem in der Zeichnung dargestellten Ausführungsbeispiel ist die Neigung aus zwei Schrägen 24 und 26 gebildet, wobei die Schräge 26 gegenüber der Schräge 24 stärker geneigt ist. In Blickrichtung auf die Fig.2, 3a und 3b gesehen ist die stärker geneigte Schräge 26 oberhalb der Schräge 24 angeordnet und unterhalb der Schräge 24 ist eine weitere Schräge 28 angeordnet, die anders gerichtet ist als die beiden anderen Schrägen 24 und 26. Die beiden die Schrägen aufweisenden Seitenflächen 18 stehen über eine Rundung 30 miteinander in Verbindung, in die die beiden Schrägen 24 und 26 einer jeden Seitenfläche 18 auslaufen. Die angesprochenen Schrägen 24,26,28 einer jeden Seitenfläche 18 begrenzen zwei Kanten, die spitz auf die beiden Kanten der anderen Seitenfläche 18 ebenso wie die Seitenflächen 18 selbst aufeinander zulaufen.

Wird, was insbesondere die Fig.2 zeigt, die Schneidplatte 10 mit ihrer Grundfläche 20 auf den Halter 22 aufgesetzt, weist die in ihr vorgesehene Ausnehmung 16 einen Versatz gegenüber einer ihr zugeordneten Ausnehmung 32 in dem Halter 22 auf, die für das Einschrauben der Spannschraube (nicht dargestellt) mit einem Innengewinde versehen ist. Wird die Spannschraube zum Befestigen der Schneidplatte 10 auf dem Halter 22 eingeschraubt, wird der in der Fig.2 dargestellte Versatz ausgeglichen, so daß die beiden Mittenlängsachsen der Ausnehmungen 16 und 32 im wesentlichen in Deckung miteinander kommen.

Um Toleranzen zwischen der jeweiligen Schneidplatte 10 und des sie aufnehmenden Halters 22 auszugleichen, kann es vorgesehen sein, daß die Seitenflächen Wölbungen 34 (siehe Fig.4a) und/oder Vorsprünge 36 (siehe Fig.4b) aufweisen. Hierbei sind jeweils paarweise längs einer Seitenfläche 18 zwei Wölbungen 34 oder zwei Vorsprünge 36 sowie auf der jeweils anderen gegenüberliegenden Seitenfläche eine Wölbung 34 bzw. ein Vorsprung 36 an der Schneidplatte 10 angeordnet. Die Wölbungen 34 sowie die Vorsprünge 36 können konvex geformt sein bzw. konvex geformte Teile aufweisen. Wie insbesondere die Fig.4a zeigt, ist zwischen zwei konvex geformten Wölbungen 34 einer Seitenfläche 18 eine konkave Wölbung 38 vorhanden. Mit den angesprochenen Wölbungen 34 und Vorsprüngen 36 ist eine Art Dreipunktlagerung der Schneidplatte 10 im Halter 22 erreicht.

Der Halter 22 weist zur Aufnahme der Schneidplatte 10 geneigte Stützflächen 40 auf. Wie die Fig.3a zeigt, ist hierbei die Stützfläche 40 dem Verlauf der Seitenfläche 18 angepaßt und liegt längs den Schrägen 24 und 26 an der jeweiligen Seitenfläche 18 an. Im Bereich der unteren Schräge 28 verläuft die Stützfläche 40 mit der Neigung der Schräge 24 weiter, so daß dort ein freigebliebener Raum entsteht, was das Einpressen der Schneidplatte 10 mit ihren geneigten Seitenflächen 18 unter die ihnen zugeordneten geneigten Stützflächen 40 erleichtert.

Fertigungstechnisch einfacher herstellbar ist der Stützflächenverlauf gemäß Fig.3b. Dort ist nur ein Teil der jeweiligen Seitenfläche 18 von der Stützfläche 40 übergriffen, der übrige Teil der Stützfläche 40, insbesondere im Bereich der zuoberst angeordneten Schräge 26, verläuft geradlinig und senkrecht auf der Grundfläche 20 stehend. Durch das in den Fig.3a,3b gezeigte Übergreifen zumindest eines Teiles der Seitenflächen 18 mittels der ihnen zugeordneten Stützflächen 40 wird ein Gegenmoment erzeugt, das die Schneidplatte 10 sicher auf dem Halter 22 festlegt, auch wenn die Schneide 12 in Eingriff mit dem zu bearbeitenden Werkstück (nicht dargestellt) ist.

Gemäß den Abbildungen nach den Fig.3a,b ist die dortige Neigung der Stützflächen 40 gleich der Neigung des Teiles der Seitenflächen 18, die in Anlage mit den Stützflächen 40 sind. Die Neigung der Stützflächen 40 kann aber auch größer sein als die Neigung dieses Teiles der Seitenflächen 18. In diesem Fall vergrößert sich der Hohlraum, der von den Stützflächen 40 begrenzt ist und in dessen Richtung die Schneidplatte 10 in den Halter 22 eingepreßt wird.

Ferner kann die Neigung der Stützflächen 40 so groß gewählt werden, daß nur noch im wesentlichen eine linienförmige Abstützung auf die jeweils ihnen zugeordneten Seitenflächen 18 gegeben ist. Im Bereich der Rundung 30 enden die beiden Stützflächen in einem Bogen 42, der einen axialen Abstand zu der Rundung 30 aufweist, so daß eine sichere Anlage von Seitenflächen 18 zu Stützflächen 40 gewährleistet ist. Im Bereich des Bogens 42 (Fig.2) verlaufen die Wandungsteile des Halters 22 geradlinig und senkrecht auf der Grundfläche 20 stehend.

Anstelle der für die Seitenflächen 18 verwendeten Schrägen 24,26,28 könnten diese auch zumindest teilweise eine Krümmung (nicht dargestellt) aufweisen, die dann wiederum mittels des Befestigungsmittels bei Ausgleich des Versatzes zwischen den Ausnehmungen 16,32 von Schneidplatte 10 und Halter 22 unter Pressung in Anlage mit den entsprechend ausgebildeten Stützflächen 40 zu bringen sind.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Schneidplatte (10) und Halter (22) für deren Aufnahme, mit einer Schneide (12), deren Form (14) einer in einem Werkstück herzustellenden Kontur angepaßt ist, mit einer durchgehenden Ausnehmung (16), die für den Durchgriff eines Befestigungsmittels vorgesehen ist, das in eine zugeordnete Ausnehmung (32) in dem Halter (22) eingreift, mit zwei in einem spitzen Winkel aufeinander zulaufenden Seitenflächen (18) und mit einer Grundfläche (20), die in Anlage mit dem Halter (22) bringbar ist, dadurch gekennzeichnet, daß zumindest ein Teil der Seitenflächen (18) gegenüber der Grundfläche (20) eine Neigung aufweist, der in Anlage mit geneigten Stützflächen (40) des Halters (22) bringbar ist, die diesen Teil der Seitenflächen (18) zumindest teilweise übergreifen, daß beim Aufsetzen der Schneidplatte (10) auf den Halter (22) die in ihr vorgesehene Ausnehmung (16) einen Versatz gegenüber der ihr zugeordneten Ausnehmung (32) in dem Halter (22) aufweist und daß mittels des Befestigungsmittels bei Ausgleich des Versatzes zwischen den Ausnehmungen (16,32) von Schneidplatte (10) und Halter (22) dieser Teil der Seitenflächen (18) unter Pressung in Anlage mit den Stützflächen (40) gehalten ist.

2. Schneidplatte (10) und Halter (22) für deren Aufnahme nach Anspruch 1, dadurch gekennzeichnet, daß die Neigung aus mindestens einer Schräge (24,26,28) oder aus mindestens einer Krümmung oder aus einer Kombination von beidem gebildet ist.

3. Schneidplatte (10) und Halter (22) für deren Aufnahme nach Anspruch 1 oder 2, dadurch gekennzeichnet, daß die beiden Seitenflächen (18) über eine Rundung (30) miteinander verbunden sind.

4. Schneidplatte (10) und Halter (22) für deren Aufnahme nach einem der Ansprüche 1 bis 3, dadurch gekennzeichnet, daß die Seitenflächen (18) Wölbungen (34) und/oder Vorsprünge (36) aufweisen.

5. Schneidplatte (10) und Halter (22) für deren Aufnahme nach einem der Ansprüche 1 bis 4, dadurch gekennzeichnet, daß die Neigung der Stützflächen (40) größer oder gleich der Neigung des Teiles der Seitenflächen (18) ist.

## Claims

1. Cutter (10) and holder (22) for holding it, having a cutting edge (12) the shape (14) of which is adapted to a profile to be formed in a workpiece, a through-hole (16) through which a fixing means, which engages in an associated hole (32) in the holder (22), can engage, two side faces (18) extending at an acute angle to one another, and a base (20) which can be brought to bear on the holder (22), characterized in that at least a portion of the side faces (18) has an inclination to the base (20) and can be brought to bear on inclined bearing faces (40) of the holder (22) which at least partially cover this portion of the side faces (18), in that, when the cutter (10) is placed on the holder (22), the hole (16) in the cutter (10) is offset relative to the associated hole (32) in the holder (22), and in that this portion of the side faces (16) is kept bearing under pressure on the bearing surfaces (40) by means of the fixing means upon adjustment of the offset between the holes (16, 32) of the cutter (10) and of the holder (22).

2. Cutter (10) and holder (22) for holding it according to Claim 1, characterized in that the inclination is formed by at least one bevel (24, 26, 28), or by at least one curvature or by a combination of the two.

3. Cutter (10) and holder (22) for holding it according to Claim 1 or Claim 2, characterized in that the two side faces (18) are connected to one another by means of a rounded portion (30).

4. Cutter (10) and holder (22) for holding it according to any one of Claims 1 to 3, characterized in that the side faces (18) have convexities (34) and/or projections (36).

5. Cutter (10) and holder (22) for holding it according to any one of Claims 1 to 4, characterized in that the inclination of the bearing faces (40) is greater than or equal to the inclination of the portion of the side faces (18).

## Revendications

1. Plaquette de coupe (10) et support (22) pour son logement, comportant une arête de coupe (12) dont la forme (14) est adaptée à un contour devant être réalisé dans une pièce à usiner, un creux continu (16) prévu pour le passage d'un moyen de fixation qui s'engage dans un creux (32) correspondant dans le support (22), deux surfaces latérales (18) qui se rejoignent pour former un angle aigu et une surface de base (20) qui peut venir en appui contre le support (22), caractérisée en ce que, une partie au moins des surfaces latérales (18) présente une inclinaison par rapport à la surface de base (20), peut venir en appui contre les surfaces d'appui (40) inclinées du support (22) qui recouvrent au moins en partie cette partie des surfaces latérales (18), en ce que lors de la fixation de la plaquette de coupe (10) sur le support (22), le creux (16) prévu dans la plaquette présente un décalage par rapport au creux (32) qui lui est associé dans le support (22) et en ce que lors de la compensation du décalage entre les creux (16, 32) de la plaquette de coupe (10) et du support (22), cette partie des surfaces latérales (18) soit maintenue sous pression, en appui contre les surfaces d'appui (40), à l'aide du moyen de fixation.

2. Plaquette de coupe (10) et support (22) pour son logement selon la revendication 1, caractérisés en ce que l'inclinaison est formée au moins d'un biseau (24, 26, 28) ou au moins d'une courbure ou d'une combinaison des deux.

3. Plaquette de coupe (10) et support (22) pour son logement selon la revendication 1 ou la revendication 2, caractérisés en ce que les deux surfaces latérales (18) sont assemblées par un arrondi (30).

4. Plaquette de coupe (10) et support (22) pour son logement selon l'une quelconque des revendications 1 à 3, caractérisés en ce que les surfaces latérales (18) présentent des courbures (34) et ou des parties en saillie (36).

5. Plaquette de coupe (10) et support (22) pour son logement selon l'une quelconque des revendications 1 à 4, caractérisés en ce que l'inclinaison des surfaces d'appui (40) est supérieure ou égale à l'inclinaison de la partie des surfaces latérales (18).
